Europäisches Patentamt

European Patent Office

Office européen des brevets

(11) Publication number: **0 666 683 A2**

# EUROPEAN PATENT APPLICATION

(21) Application number: 95101437.2

(51) Int. Cl.⁶: **H04N 1/40**

(22) Date of filing: 02.02.95

(30) Priority: **04.02.94 JP 12820/94**

(43) Date of publication of application:
**09.08.95 Bulletin 95/32**

(84) Designated Contracting States:
**DE ES FR GB**

(71) Applicant: **MITSUBISHI DENKI KABUSHIKI
KAISHA
2-3, Marunouchi 2-chome
Chiyoda-ku
Tokyo 100 (JP)**

(72) Inventor: **Kouzai, Fumio, c/o Mitsubishi Denki
K. K.**

**Fukuyama Seisakusho,
1-8, Midori-machi
Fukuyama-shi,
Hiroshima 720 (JP)**
Inventor: **Haramoto, Kenichi, c/o Mitsubishi
Denki K. K.
Fukuyama Seisakusho,
1-8, Midori-machi
Fukuyama-shi,
Hiroshima 720 (JP)**

(74) Representative: **KUHNEN, WACKER &
PARTNER
Alois-Steinecker-Strasse 22
D-85354 Freising (DE)**

(54) **Thermal transfer printing method and apparatus.**

(57) A thermal transfer printing method and apparatus can arbitrarily set hues of black by using a single ink sheet, and continuously increase the density of printed black images having various hues to the maximum. A thermal head for printing is pressed against an ink sheet 1A, on which black inks 3a and 3b each having a reddish hue and a greenish hue are alternately applied in wider areas than print areas, while changing the ratio of thermal transfer energy amounts for the individual inks, thereby thermally transferring amounts of the inks in accordance with the corresponding thermal transfer energy amounts onto a printing paper placed beneath the ink sheet 1A.

FIG. 5

## BACKGROUND OF THE INVENTION

### FIELD OF THE INVENTION:

The present invention relates to a thermal transfer printing method and apparatus, and more particularly to a thermal transfer printing method and apparatus which can print an image of the density and hue desired by a user on printing paper regardless of the type of printing paper or an ink sheet.

### DESCRIPTION OF THE RELATED ART:

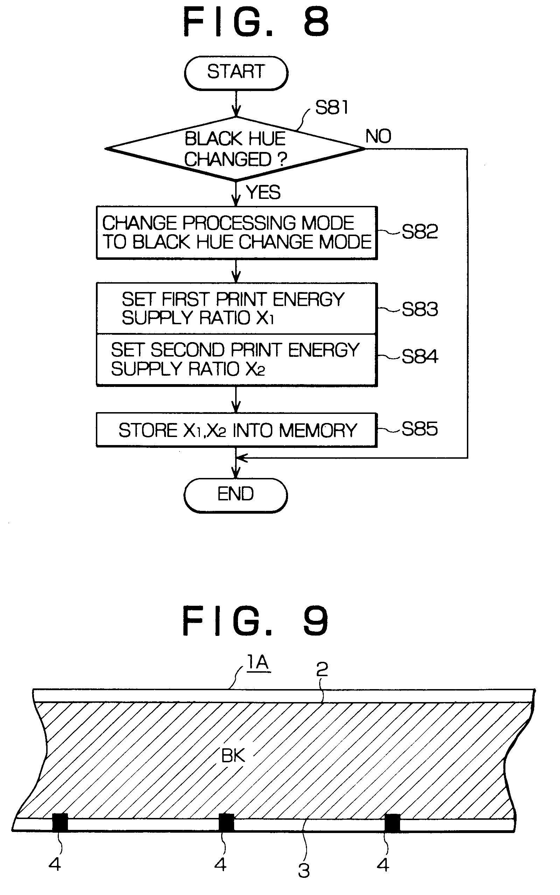

Fig. 9 illustrates a monochrome ink sheet (referred to merely as an ink sheet hereinafter) to be used in a conventional sublimation-type thermal transfer printing apparatus disclosed in, for example, Japanese Patent Laid-Open No. 2-587. Referring to the figure, there are provided an ink sheet 1 wound on an unillustrated core, a base film 2 laid on the ink sheet 1 and made of, for example, a polyester film having a thickness of 2-8$\mu$m, a black ink 3 made of a sublimable dye applied on one side of the base film 2 by, for example, gravure printing, and sensor marks 4. The sensor marks 4 enable an unillustrated sensor to recognize the transfer start position of the ink 3 on the ink sheet 1 when an unillustrated ink sheet roll is loaded in the printing apparatus and the ink 3 is transferred onto unillustrated printing paper by an unillustrated thermal head.

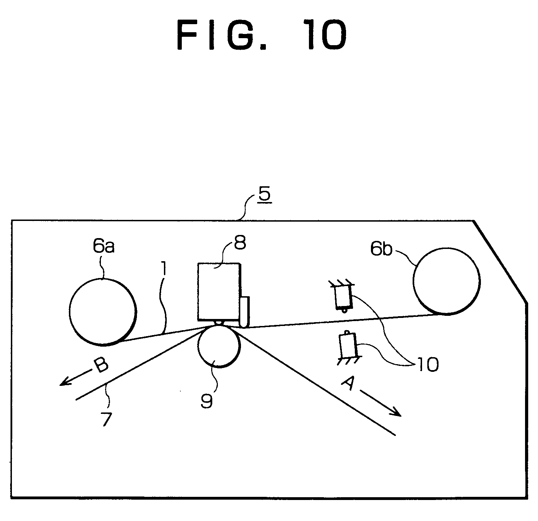

Fig. 10 is a view showing a general structure of the conventional sublimation-type thermal transfer printing apparatus which prints images on printing paper by using the ink sheet 1 shown in Fig. 9. Referring to Fig. 10, numeral 5 denotes a main body of the thermal transfer printing apparatus. The printing apparatus 5 is comprised of a first core 6a having the ink sheet 1 wound thereon, a second core 6b for taking up the ink sheet 1 transported out from the first core 6a, a thermal head 8 located below the ink sheet 1 for conducting dot-matrix printing with heating elements (not illustrated) by heating and pressing the base film 2 on the ink sheet 1 onto printing paper 7 to be wound and rewound by an unillustrated roller, a platen roller 9 located to face the thermal head 8 through the ink sheet 1 and the printing paper 7 in order to enable the printing sheet 7 to receive the pressed ink sheet 1, and an ink sensor 10 for detecting the sensor marks 4 on the ink sheet 1.

A printing method performed with the above-mentioned conventional printing apparatus will now be described. In this method, various types of images including characters and so on are superimposed on the printing paper 7 in a black ink. First, the ink sheet 1 is wound onto the second core 6b until the ink sensor 10 detects the sensor mark 4 on the ink sheet 1 which indicates the first printing start position. At this time, since the thermal head 8 is separated from the ink sheet 1, the ink sheet 1 will not press the printing paper 7 onto the platen roller 9.

Then, when the ink sensor 10 detects the sensor mark 4 indicating the first printing start position, the thermal head 8 comes into contact with the ink sheet 1 while heating the heating elements. Since the printing paper 7 is being moved along the platen roller 9 in the direction of arrow A under the ink sheet 1, the black ink applied on the ink sheet 2 is vaporized and images visualized by the unillustrated heating elements are thermally transferred onto the surface of the printing paper 7.

When the first printing option is completed as described above, the second printing operation is started to increase the density of the printed images. At this time, the ink sheet 1 is taken up by the second core 6b until the ink sensor 10 detects the sensor mark 4 indicating the second printing start position. On the other hand, the printing paper 7 is rewound in the direction of arrow B to the first printing start position by an unillustrated rewinding roller.

The printing paper 7 is refund to the first printing start position, and then, the same printing operation as the first one is resumed to superimpose the same images on the printed images in a black ink of the same hue. Such repetitious superimposition of the same images in the black inks of the same hue enables characters of high density to be printed on the printing paper 7.

The conventional sublimation-type thermal transfer printing apparatus performs printing as described above, and therefore, printed images of high density can be obtained by superimposing the same images on the printing paper in black inks of the same hue. However, since the black inks of the same hue are used in the first and second printing operations, it is impossible to effect printing in black inks of hues suitable for sheets of printing paper having similar colors but different hues, and so the quality of the printing is not satisfactory.

Depending upon the type of printing paper (for example, different in hue) or the type of the ink sheet (for example, different in the hue of black ink), for example, if the type of the printing paper differs, a difference in hue is found between printed blacks even with the use of ink sheets of a similar color.

Furthermore, the hue of black to be printed is principally determined by the hue of a black ink applied on an ink sheet to be used, so the atmosphere of a printed image is not changed by changing the hue of the black to be printed.

## SUMMARY OF THE INVENTION

The present invention is intended to solve the above problems encountered with the aforementioned conventional thermal printing method and apparatus. It is therefore, an object of the present invention to provide a thermal transfer printing method and apparatus which can arbitrarily set hues of black by using a single ink sheet, and continuously increase the density of printed black images having various hues to the maximum.

According to one aspect of the present invention, there is provided a thermal transfer printing method using an ink sheet having at least two ink areas to which different kinds of inks are coated, the method comprising:

thermally transferring one of the inks coated on the ink sheet to a printing paper with a first amount of thermal transfer energy; and

thermally transferring another ink coated on the ink sheet to the printing paper with a second amount of thermal transfer energy;

wherein a ratio of the first thermal transfer energy amount to the second thermal transfer energy amount can be arbitrarily adjusted to control the hue of a printed image.

According to another aspect of the present invention, there is provided a thermal transfer printing method using an ink sheet having at least two ink areas to which different kinds of inks are coated, the method comprising:

shifting the ink sheet to a first position in which one of the ink areas is located at a predetermined printing position;

pressing a thermal printing head with a first amount of thermal transfer energy against the one ink area of the ink sheet to thereby thermally transfer one of the inks coated thereon to a printing paper placed beneath the ink sheet in accordance with the first thermal transfer energy amount;

shifting the ink sheet to a second position in which another ink area is located at the predetermined printing position; and

pressing the thermal printing head with a second amount of thermal transfer energy against the another ink area of the ink sheet to thereby thermally transfer another ink coated thereon to the printing paper in accordance with the second thermal transfer energy amount;

wherein a ratio of the first thermal transfer energy amount to the second thermal transfer energy amount can be arbitrarily adjusted to control the hue of a printed image.

According to a further aspect of the present invention, there is provided a thermal transfer printing method comprising:

alternately applying two kinds of inks having contrary hues to areas of an ink sheet wider than corresponding print areas of a printing paper; and

thermally transferring the inks onto the print areas of the printing paper under the ink sheet in accordance with thermal transfer energy amounts for the inks by pressing a thermal head for printing against the ink sheet while adjusting a ratio of the thermal transfer energy amounts.

According to a still further aspect of the present invention, there is provided a thermal transfer printing method comprising:

alternately applying two kinds of inks having contrary hues to areas of an ink sheet wider than corresponding print areas of a printing paper following inks of three primary colors; and

thermally transferring the inks of contrary hues onto the print areas of the printing paper placed beneath the ink sheet in accordance with thermal transfer energy amounts for the inks by pressing a thermal head for printing against the ink sheet while adjusting a ratio of the thermal transfer energy amounts.

According to a yet further aspect of the present invention, there is provided a thermal transfer printing apparatus comprising:

a thermal head for thermally and alternately transferring inks of different hues individually applied to an ink sheet onto a piece of single printing paper placed beneath the ink sheet;

ink amount calculating means for calculating amounts of the inks to be thermally transferred by the thermal head; and

drive control means for controlling a heat amount of the thermal head in accordance with each of the calculated thermally transferred ink amounts.

According to a further aspect of the present invention, there is provided a thermal transfer printing apparatus comprising:

a thermal head for thermally and alternately transferring inks of different hues individually applied to an ink sheet onto a single piece of printing paper placed beneath the ink sheet;

hue setting means for setting a hue of an image to be printed on the printing paper;

ratio calculating means for calculating a ratio of thermal transfer energy amounts for the individual ink based on the set hue; and

drive control means for controlling heat amounts of the thermal head in accordance with the calculated energy ratio.

According to a further aspect of the present invention, there is provided a thermal transfer printing apparatus comprising: a thermal head for thermally and alternately transferring inks of different hues individually applied on an ink sheet onto a single printing paper placed under the ink sheet;

ink amount calculating means for calculating amounts of the inks to be thermally transferred by the thermal head;

hue setting means for setting a hue of an image to be printed on the printing paper;

ratio calculating means for calculating a ratio of thermal transfer energy amounts for the individual inks based on the set hue; and

drive control means for controlling heat amounts of the thermal head in accordance with the calculated energy ratio.

In a preferred form of the invention, the drive control means controls the amount of electric power to be supplied to the thermal head.

In a further preferred form the invention, the drive control means controls the duration of current supply to the thermal head.

The above and other objects, features and advantages of the present invention will become apparent from the following detailed description of preferred embodiments of the invention taken in conjunction with the accompanying drawings.

BRIEF DESCRIPTION OF THE DRAWINGS

Fig. 1 is a plan view of a black ink sheet used in an embodiment of the present invention;

Fig. 2 is a L*a*b color system chromaticity diagram;

Fig. 3 is a plan view of a color ink sheet used in accordance with another embodiment of the present invention;

Fig. 4 is a diagram showing a relationship between thermal transfer energy and hue in accordance with a further embodiment of the present invention;

Fig. 5 is a view showing the general construction of a printing apparatus in accordance with a further embodiment of the present invention;

Figs. 6(a)-6(c) are waveform charts of a basic pulse signal for increasing and decreasing thermal transfer energy;

Fig. 7 is a flowchart explaining a printing operation of the printing apparatus of the present invention;

Fig. 8 is a flowchart explaining a hue change operation of the printing apparatus of the present invention;

Fig. 9 is a plan view of a conventional monochrome ink sheet; and

Fig. 10 is a sectional view showing the general structure of a conventional thermal transfer printing apparatus.

DESCRIPTION OF THE PREFERRED EMBODIMENTS

Embodiments of the present invention will now be described in conjunction with the accompanying drawings.

Embodiment 1

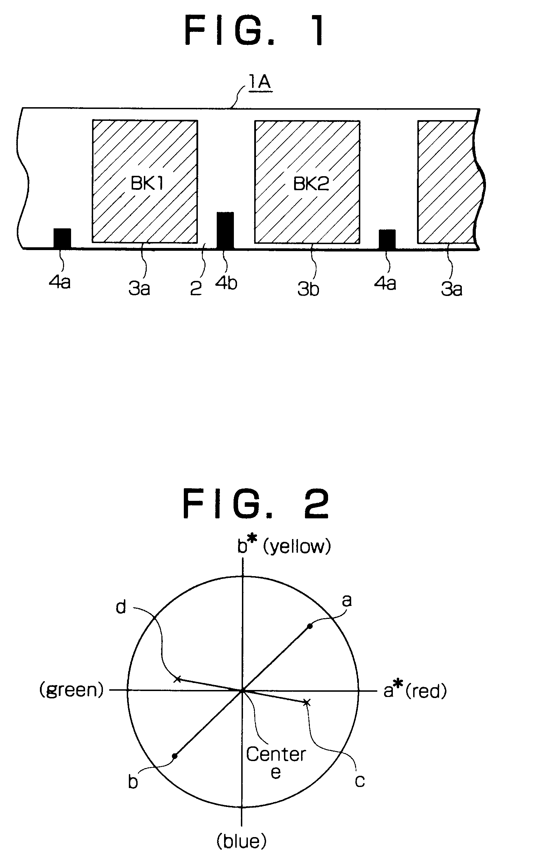

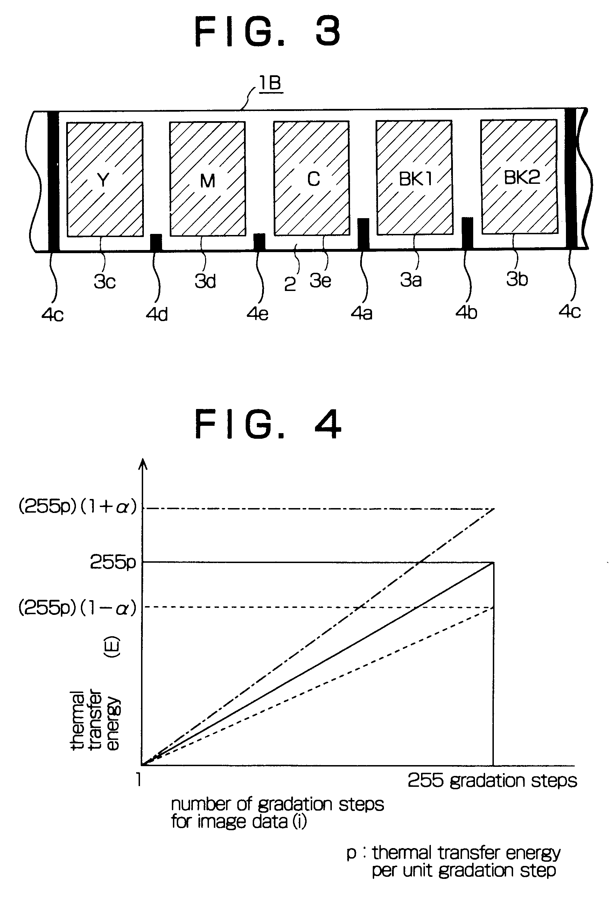

Fig. 1 is a view showing an example of a sublimation-type thermal transfer ink sheet (hereinafter referred to merely as an ink sheet) to be used in a thermal transfer printing apparatus such as, for example, a sublimation-type thermal transfer printing apparatus in this embodiment. Referring to Fig. 1, reference numeral 1A denotes the entire ink sheet. On the ink sheet 1A, a black ink 3a (for example, a reddish black ink) for first printing and a black ink 3b (for example, a greenish black ink) for second printing are each applied in wider areas than image areas on one side of a base film 2. The reddish black ink 3a and the greenish black ink 3b are sublimable dyes applied by gravure printing or the like, and have contrary hues.

Sensor marks 4a and 4b enable an ink sensor 10 to recognize the transfer start positions of the reddish black ink 3a and the greenish black ink 3b, respectively. The base film 2 includes a plurality of areas alternately applied with the reddish black ink 3a and the greenish black ink 3b, and a plurality of sensor marks 4a and 4b alternately arranged for indicating the transfer start positions of the inks 3a and 3b.

The selection of the reddish black ink 3a and the greenish black ink 3b is performed based on a L*a*b color system chromaticity diagram shown in Fig. 2. If the hue of a black ink having a first hue is $a$, $b$ located in symmetry with $a$ with respect to the center $e$ (genuine black) is selected as a hue of a black ink having a second hue. If the hue of the black ink having the first hue is $c$, $d$ located in symmetry with $c$ with respect to the center $e$ - (genuine black) is selected as the hue of the black ink having the second hue.

Embodiment 2

Fig. 3 illustrates an ink sheet for color printing. Besides the configuration of the ink sheet 1A in the first embodiment, an ink sheet 1B includes areas applied with inks 3c, 3d and 3e of three colors, i.e., yellow, magenta and cyan, which are arranged at regular intervals, on a base film 2. There are also provided sensor marks 4c, 4d and 4e indicating the transfer start positions of the inks 3c, 3d and 3e, respectively.

Images of the yellow, magenta and cyan inks 3c, 3d and 3e are thermally transferred and superimposed onto printing paper, and then, a black print image can be obtained. However, since this black is not genuine in general, an image of a black ink having a predetermined hue is additionally superimposed in order to obtain a print image of almost genuine black Therefore, superimposition of images with the yellow, magenta and cyan inks 3c, 3d and 3e and a black ink having a predetermined hue makes it possible to print an image having the hue and density desired by the user on the printing paper.

## Embodiment 3

A method of changing the density and hue of an image to be printed on printing paper 7 with the ink sheets 1A and 1B described in the first and second embodiments will be explained with reference to a thermal transfer energy characteristic graph shown in Fig. 4. In this characteristic graph, the horizontal axis indicates gradation (density) data of print images. In the case where the gradation step (i) is 1, the print density is the lowest, and in the case where the gradation step (i) is 255, the print density is the highest.

255p on the vertical axis indicates thermal transfer energy supplied to heating elements of a thermal head in printing of 255 gradation steps. It is assumed that thermal transfer energy more than 255p is given by $(255p)(1+\alpha)$ and thermal transfer energy less than 255p is given by $(255p)(1-\alpha)$. In each expression, p indicates thermal transfer energy per unit gradation step, and $\alpha$ indicates a constant.

In order to generally realize a print image of gradation step i in two printing operations, it is only necessary to supply thermal transfer energy for each operation as in the following expression.

$$(i/255 \times 255p) \times (1+\alpha) + (i/255 \times 255p) \times (1-\alpha)$$

In this expression, the first term shows thermal transfer energy to be supplied in the first printing (with the reddish black ink 3a), and the second term shows thermal transfer energy to be supplied in the second printing (with the greenish black ink 3b). Print images in blacks having various kinds of hues can be produced in the same thermal transfer energy (the sum of the thermal transfer energies in the first and second printing operations) by arbitrarily setting the value of $\alpha$.

In other words, the printed image is genuine black when $\alpha = 0$, reddish black when $\alpha > 0$ and greenish black when $\alpha < 0$. Thus, blacks having various kinds of hues can be obtained by controlling the ratio of the thermal transfer energies in the first and second printing operations.

## Embodiment 4

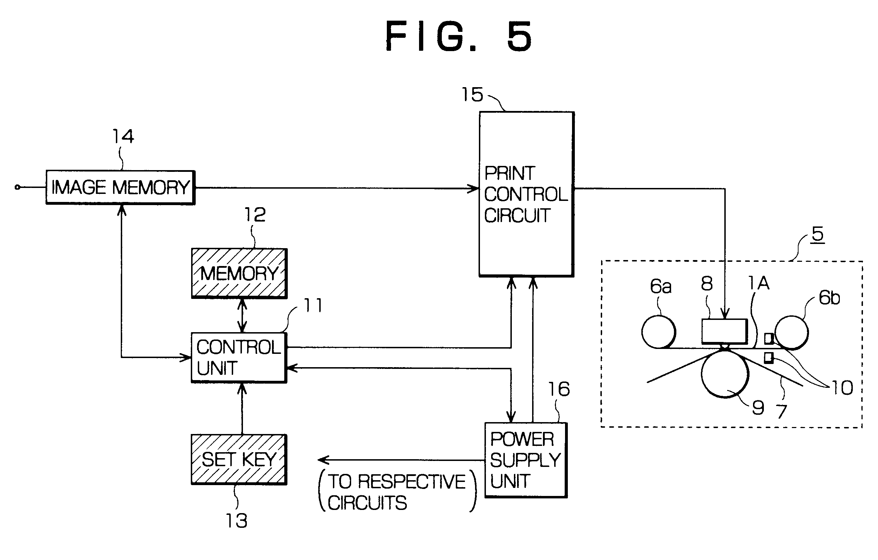

A thermal transfer printing apparatus which carries out the above-mentioned printing method will now be explained in conjunction with the following drawings. Fig. 5 is a block diagram showing the structure of the thermal transfer printing apparatus in this embodiment. Referring to the figure, a control unit 11 controls the entire apparatus based on preset data and data input from outside, and a memory 12 stores information for generating appropriate commands to be supplied to a print control circuit, which is described below, in response to print conditions, such as the temperature in printing, the print ratio, and the type of a print medium to be used.

A set key 13 mounted in the body of the printing apparatus transmits directions from the user (for example, the density, the hue or the like of a print image that he desires) to the control unit 11, and an image memory 14 stores an image to be printed on the printing paper 7 as image data. A print control circuit 15 generates print drive data to print the data in the image memory 14 according to commands input from the control unit 11, and outputs the print drive data to a thermal head 8. Reference numeral 16 denotes a power supply unit for supplying electric power to each circuit.

In order to generate a black of a desired hue on the printing paper 7, the user inputs data (for example, characters or signs representing reddish black or greenish black in the case of hue, or Low, Middle or High in the case of density) to determine the desired hue or density to the control unit 11 by using the set key 13. As a result, the control unit 11 calculates a value of $\alpha$ to control the ratio of a thermal transfer energy supplied to the ink 3a to that supplied to the ink 3b with an algorithm previously stored in the memory 12 based on directions from the user.

The control unit 11 generates a command to increase or decrease the thermal transfer energy of the thermal head 8 based on the calculated $\alpha$ value, and outputs the command to the print control circuit 15. The print control circuit 15 controls the amount of electric power to be supplied to unillustrated heating elements of the thermal head 8 based on the input command, and increases or decreases the thermal transfer energy.

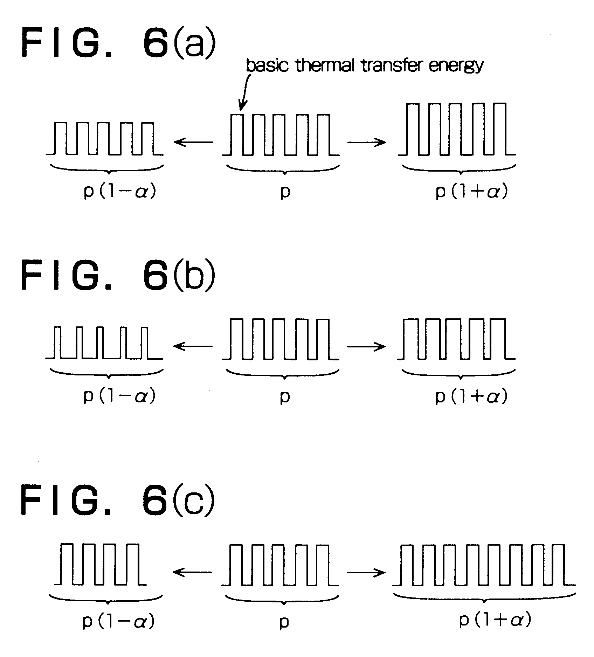

By changing the level of a basic pulse signal (i.e., a basic thermal transfer energy p), as shown in Fig. 6(a), to increase or decrease the voltage value to be supplied to the heating elements, the thermal transfer energy is increased $(p(1+\alpha))$ or decreased $(p(1-\alpha))$.

As shown In Fig. 6(b), the thermal transfer energy is increased $(p(1+\alpha))$ or decreased $(p(1-\alpha))$ by changing the duty of the basic pulse signal (the basic thermal transfer energy p) so as to increase or decrease the average voltage value applied to the heating elements.

Furthermore, as shown in Fig. 6(c), the pulse voltage supplied to the heating elements is increased or decreased so that the thermal transfer energy is accordingly increased ($p(1+\alpha)$) or decreased ($p(1-\alpha)$) by increasing or decreasing the number of pulses of the basic pulse signal (the basic thermal transfer energy p) which constitutes the thermal transfer energy per unit gradation step.

The increase and decrease of the thermal transfer energy is conducted in accordance with one of the methods shown in Fig. 6(a)-Fig. 6(c) based on a single command or in accordance with the combination of some of the methods.

More specifically, in order to control the basic pulse, when a DC voltage of 24V is applied to the print control circuit 15 from the power supply unit 16, the print control circuit 15 modulates the DC voltage to a pulse signal of a constant voltage and a constant frequency for generating the basic thermal transfer energy p based on a command from the control unit 11.

When receiving a command to direct the increase of the thermal transfer energy from the control unit 11, the print control circuit 15 increases the signal level of the basic pulse signal as shown in, for example, Fig. 6(a), and decreases the signal level when receiving a command to direct the decrease of the energy.

When receiving a command to direct the increase or decrease of the thermal transfer energy, the print control circuit 15 changes the duty or the number of pulses as shown in Fig. 6(b) and (c).

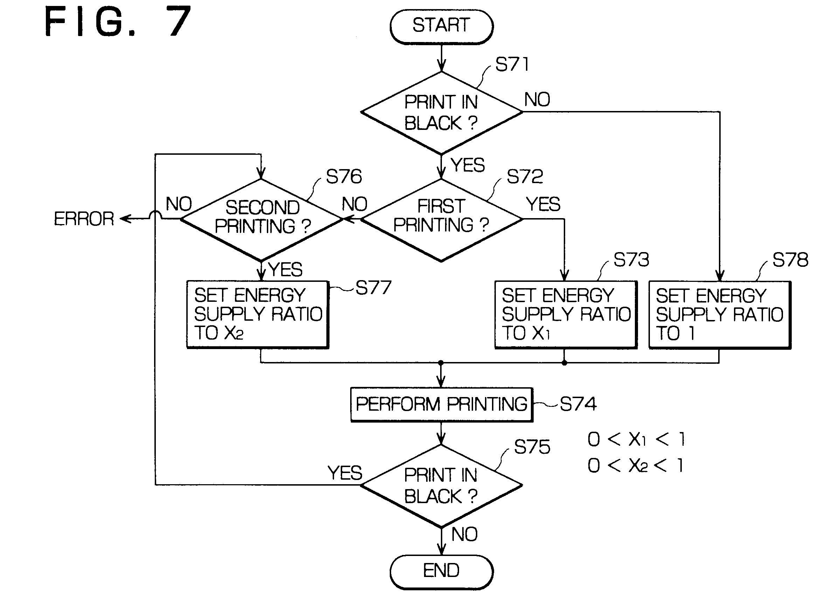

The print processing operation of the control unit 11 will now be described while referring to a flowchart shown in Fig. 7. First in Step S71, based on data input from the set key 13, it is determined whether images are to be superimposed on the printing paper 7 with a black ink in a predetermined hue. If the answer to this question is "YES", then in Step S72, it is determined based on a signal from the ink sensor 10 whether a reddish black ink for the first printing is to be prepared on a print area of the printing paper 7. If so, the process proceeds to Step S73 where a command to perform printing in an energy supply ratio (thermal transfer energy) $X_1$ based on a formula $(i/255 \times 255p) \times (1+\alpha)$ is transmitted to the print control circuit 15, whereby the first printing is carried out in Step S74.

After the completion of the first printing, it is further determined in Step S75 whether an ink on the base film set on the print area of the printing paper 7 is to be prepared for black printing. If the answer to this question is positive ("YES"), the process proceeds to Step S76 where it is determined based on a signal from the ink sensor 10 as to whether the black ink is a greenish black ink for the second printing. If so, then in Step S77, a command to perform printing in an energy supply ratio (thermal transfer energy) $X_2$ based on a formula $(i/255 \times 255p) \times (1-\alpha)$ is transmitted to the print control circuit 15, whereby superimposition is conducted in the energy supply ratio (thermal transfer energy ) $X_2$ in Step S74.

If, however, it is determined in Step S75 after the second printing that the ink on the base film set on the print area of the printing paper 7 is not for black printing, the superimposition with the black ink is completed.

On the other hand, if it is determined in Step S71 that printing with black ink is not to be started, then in Step S78, a command to perform printing of a predetermined color in an energy supply ratio (thermal transfer energy) 1 is transmitted to the print control circuit 15, whereby printing with the predetermined color is carried out in Step S74. Subsequently, in Step S75, a negative determination is made and the process ends.

Processing after data to change the set hue of black is input from the set key 13 to the control unit 11 will now be described while referring to a flowchart shown in Fig. 8. First in Step S81, it is determined based on the data input from the set key 13 whether the black hue is to be changed. If the answer to this question is positive ("YES"), then in Step S82, the control unit 11 changes the present processing mode to a black hue change mode.

Subsequently, the user inputs data to desire, for example, a reddish black, whereby the control unit 11 sets first and second print energy supply ratios $X_1$ and $X_2$ for determining the ratio of the print (thermal transfer) energies in the first and second thermal printing operations to obtain a reddish black hue in Steps S83 and S84. Thereafter, in Step S85, the set first and second print energy supply ratios $X_1$ and $X_2$ are stored in the memory 12, so that the control unit 11 outputs heat-generation directing commands to be needed in the first and second printing operations based on the set first and second print energy supply ratios $X_1$ and $X_2$. After Step S85, or if the answer to the question in Step S81 is negative ("NO"), the process ends.

As apparent from the foregoing description, there are obtained the following advantages in accordance with the present invention.

An image of gradation steps in accordance with thermal transfer energy amounts can be printed on a printing paper while adjusting the hues of ink.

Since an image in a black ink of a predetermined hue obtained by adjusting the thermal transfer energy amounts can be laid on a superimposed image in inks of primary colors, there is a wide range of hues of print images.

It is possible to arbitrarily set the gradation step, that is, the density of a print image.

It is possible to print an image having the hue desired by the user on the printing paper.

It is possible to print an image having the density and hue desired by the user on the printing paper.

It is possible to easily control the thermal transfer energy amounts.

It is possible to finely adjust the hue by accurately controlling the respective thermal transfer energy amounts.

## Claims

1. A thermal transfer printing method using an ink sheet having at least two ink areas to which different kinds of inks are coated, said method comprising:

   thermally transferring one of said inks coated on said ink sheet to a printing paper with a first amount of thermal transfer energy; and

   thermally transferring another ink coated on said ink sheet to said printing paper with a second amount of thermal transfer energy;

   wherein a ratio of said first thermal transfer energy amount to said second thermal transfer energy amount can be arbitrarily adjusted to control the hue of a printed image.

2. A thermal transfer printing method using an ink sheet having at least two ink areas to which different kinds of inks are coated, said method comprising:

   shifting said ink sheet to a first position in which one of said ink areas is located at a predetermined printing position;

   pressing a thermal printing head with a first amount of thermal transfer energy against said one ink area of said ink sheet to thereby thermally transfer one of said inks coated thereon to a printing paper placed beneath said ink sheet in accordance with said first thermal transfer energy amount;

   shifting said ink sheet to a second position in which another ink area is located at the predetermined printing position; and

   pressing said thermal printing head with a second amount of thermal transfer energy against said another ink area of said ink sheet to thereby thermally transfer another ink coated thereon to said printing paper in accordance with said second thermal transfer energy amount;

   wherein a ratio of said first thermal transfer energy amount to said second thermal transfer energy amount can be arbitrarily adjusted to control the hue of a printed image.

3. A thermal transfer printing method comprising:

   alternately applying two kinds of inks having contrary hues to areas of an ink sheet wider than corresponding print areas of a printing paper; and

   thermally transferring said inks onto said print areas of said printing paper under said ink sheet in accordance with thermal transfer energy amounts for said inks by pressing a thermal head for printing against said ink sheet while adjusting a ratio of said thermal transfer energy amounts.

4. A thermal transfer printing method comprising:

   alternately applying two kinds of inks having contrary hues to areas of an ink sheet wider than corresponding print areas of a printing paper following inks of three primary colors; and

   thermally transferring said inks of contrary hues onto said print areas of said printing paper placed beneath said ink sheet in accordance with thermal transfer energy amounts for said inks by pressing a thermal head for printing against said ink sheet while adjusting a ratio of said thermal transfer energy amounts.

5. A thermal transfer printing apparatus comprising:

   a thermal head for thermally and alternately transferring inks of different hues individually applied to an ink sheet onto a piece of single printing paper placed beneath said ink sheet;

   ink amount calculating means for calculating amounts of said inks to be thermally transferred by said thermal head; and

   drive control means for controlling a heat amount of said thermal head in accordance with each of said calculated thermally transferred ink amounts.

6. A thermal transfer printing apparatus comprising:

   a thermal head for thermally and alternately transferring inks of different hues individually applied to an ink sheet onto a single piece of printing paper placed beneath said ink sheet;

   hue setting means for setting a hue of an image to be printed on said printing paper;

   ratio calculating means for calculating a ratio of thermal transfer energy amounts for said individual inks based on said set hue; and

   drive control means for controlling heat amounts of said thermal head in accordance with said calculated energy ratio.

7. A thermal transfer printing apparatus comprising: a thermal head for thermally and alternately transferring inks of different hues individually applied on an ink sheet onto a single printing paper placed under said ink sheet;

ink amount calculating means for calculating amounts of said inks to be thermally transferred by said thermal head;

hue setting means for setting a hue of an image to be printed on said printing paper;

ratio calculating means for calculating a ratio of thermal transfer energy amounts for said individual inks based on said set hue; and

drive control means for controlling heat amounts of said thermal head in accordance with said calculated energy ratio.

8. The thermal transfer printing apparatus as claimed in any one of claims 5 through 7 wherein said drive control means controls the amount of electric power to be supplied to said thermal head.

9. The thermal transfer printing apparatus as claimed in any one of claims 3 through 5 wherein said drive control means controls the duration of current supply to said thermal head.

# FIG. 1

1A

BK1

BK2

4a    3a    2  4b    3b    4a    3a

# FIG. 2

b* (yellow)

d                    a

(green) ─────────── a* (red)

Center
e

b                    c

(blue)

# FIG. 3

# FIG. 4

number of gradation steps
for image data (i)

p : thermal transfer energy
per unit gradation step

# FIG. 5

EP 0 666 683 A2

# FIG. 6(a)

basic thermal transfer energy

$$p(1-\alpha) \qquad p \qquad p(1+\alpha)$$

# FIG. 6(b)

$$p(1-\alpha) \qquad p \qquad p(1+\alpha)$$

# FIG. 6(c)

$$p(1-\alpha) \qquad p \qquad p(1+\alpha)$$

# FIG. 7

START

S71 PRINT IN BLACK ? — NO

YES — S72

S76 SECOND PRINTING ? — NO ← FIRST PRINTING ? — YES

ERROR ← NO

YES

S77 SET ENERGY SUPPLY RATIO TO $X_2$

S73 SET ENERGY SUPPLY RATIO TO $X_1$

S78 SET ENERGY SUPPLY RATIO TO 1

PERFORM PRINTING — S74

S75 PRINT IN BLACK ?

YES

NO

END

$$0 < X_1 < 1$$
$$0 < X_2 < 1$$

EP 0 666 683 A2

# FIG. 8

START

S81

BLACK HUE CHANGED ? — NO

YES

CHANGE PROCESSING MODE TO BLACK HUE CHANGE MODE — S82

SET FIRST PRINT ENERGY SUPPLY RATIO $X_1$ — S83

SET SECOND PRINT ENERGY SUPPLY RATIO $X_2$ — S84

STORE $X_1, X_2$ INTO MEMORY — S85

END

# FIG. 9

# FIG. 10